# EUROPEAN PATENT APPLICATION

(11) **EP 2 199 337 A1**
(43) Date of publication of application: **23.06.2010**
(21) Application number: 09180390.8
(22) Date of filing: 22.12.2009
(51) Int. Cl.: C08L 33/12, C08L 55/02, C08L 69/00

(54) **Blend composition of polycarbonate resin and vinyl-based copolymer and molded product made using the same**

(30) Priority: 22.12.2008 KR 20080131319; 24.12.2008 KR 20080133685; 18.12.2009 KR 20090127311; 18.12.2009 KR 20090127312
(71) Applicant: Cheil Industries Inc., Kumi-city, Kyungsangbuk-do (KR)
(72) Inventor: Shin, Chan-Gyun, Uiwang-si, Gyeonggi-do (KR); Lee, Jae-Hyung, Uiwang-si, Gyeonggi-do (KR); Lee, Bong Jae, Uiwang-si, Gyeonggi-do (KR); Kim, Tae-Uk, Yeosu-si, Jeollanam-do (KR)
(74) Representative: Bublak, Wolfgang

(57) **Abstract**

Disclosed is a blend composition of a polycarbonate resin and a vinyl-based copolymer that includes (A) a mixed resin including (A-1) a polycarbonate resin and (A-2) a vinyl-based copolymer and (B) an acryl-based copolymer including at least one of an acryl-based monomer, and a molded product made using the same.

## Description

This disclosure relates to a blend composition of a polycarbonate resin and a vinyl-based copolymer and a molded product made using the same.

In general, a polycarbonate resin has comparatively high molding temperature and melting viscosity and thus, may leave stress in a molded product during the injection molding. In addition, it has weak chemical resistance and thus, may be hydrolyzed due to moisture. Accordingly, a blend composition of a polycarbonate resin and a vinyl-based copolymer is introduced to improve mechanical properties and heat resistances.

The blend of a polycarbonate resin and a vinyl-based copolymer is a resin mixture maintaining excellent impact resistance, heat resistance, and mechanical strength and having improved workability. It may be widely used for a common auto part, computer housing, other office devices, and the like. However, it may have dispersive phase coagulation in a fusion state under a particular condition. It may also have low mechanical strength at the weld region due to this low compatibility of a polycarbonate and a vinyl-based copolymer when a product with more than two gates is molded.

On the other hand, the blend composition of a polycarbonate resin and a vinyl-based copolymer is known to have increased weld strength by increasing the molecular weight of the polycarbonate to decrease viscosity. However, when this is used for complex or thin film molding, it should be conventionally worked at a higher temperature than the molding temperature due to the low viscosity. When its molding temperature is increased, it may have deteriorated weld strength, which is improved by deteriorating viscosity.

Furthermore, in order to improve low compatibility of a polycarbonate resin and a vinyl-based copolymer, a methylmethacrylate-based compatibilizer having about average compatibility of these two components may be used. However, the methylmethacrylate-based may have deteriorated compatibility with the polycarbonate resin at 250 to 280°C, which is a common molding temperature of the polycarbonate resin and the vinyl-based copolymer. It may also have deteriorated molding property when it is excessively included. Accordingly, it may not be appropriately used to improve weld strength.

It is the object of the present invention to provide a blend composition of a polycarbonate resin and a vinyl-based copolymer having excellent weld strength and impact resistance.

Another aspect of this disclosure provides a molded product made using the blend composition of a polycarbonate resin and a vinyl-based copolymer.

Above object has been achieved by the provision of a blend composition of a polycarbonate resin and a vinyl-based copolymer is provided that includes (A) a mixed resin including (A-1) 20 to 90 wt% of a polycarbonate resin; and (A-2) 10 to 80 wt% of a vinyl-based copolymer; and (B) 0.1 to 20 parts by weight of an acryl-based copolymer including at least one of acryl-based monomers based on 100 parts by weight of the mixed resin.

The polycarbonate resin (A-1) may be prepared by reacting diphenols with a compound of phosgene, halogen formate, carbonate ester, or a combination thereof.

The vinyl-based copolymer (A-2) may include a rubber modified vinyl-based graft copolymer, a linear vinyl-based copolymer, or a combination thereof.

The rubber modified vinyl-based graft copolymer may include 5 to 95 wt% of a vinyl-based polymer including 50 to 95 wt% of a first vinyl-based monomer selected from an aromatic vinyl monomer, an acryl-based monomer, a heterocyclic monomer, or a combination thereof; and 5 to 50 wt% of a second vinyl-based monomer selected from a unsaturated nitrile monomer, an acryl-based monomer, a heterocyclic monomer, or a combination thereof, which is grafted onto 5 to 95 wt% of a rubber polymer selected from a butadiene rubber, an acryl rubber, an ethylene/propylene rubber, a styrene/butadiene rubber, an acrylonitrile/butadiene rubber, an isoprene rubber, an ethylene-propylene-diene (EPDM) terpolymer, a polyorganosiloxane/polyalkyl(meth)acrylate rubber composite, or a combination thereof. The linear vinyl-based copolymer may be a copolymer of 50 to 95 wt% of a first vinyl-based monomer selected from an aromatic vinyl monomer, an acryl-based monomer, a heterocyclic monomer, or a combination thereof; and 5 to 50 wt% of a second vinyl-based monomer selected from an unsaturated nitrile monomer, an acryl-based monomer, a heterocyclic monomer, or a combination thereof.

The acryl-based copolymer (B) may be a copolymer of 30 to 90 wt% of a first monomer selected an aromatic vinyl monomer, an acryl-based monomer, a heterocyclic monomer, or a combination thereof; and 10 to 70 wt% of a second monomer selected from an aromatic vinyl monomer differing from the aromatic vinyl monomer, an acryl-based monomer differing from the acryl-based monomer, a heterocyclic monomer differing from the heterocyclic monomer, or a combination thereof. At least one of the first monomer and the second monomer is an acryl-based monomer. Herein, the acryl-based copolymer (B) may be prepared by grafting the first monomer onto the second monomer for copolymerizion. In particular, it may be a copolymer of an acryl-based monomer and another acryl-based monomer differing from the acryl-based monomer. In more particular, it may be a copolymer of methylmethacrylate and ethylacrylate.

The acryl-based copolymer (B) may have a weight average molecular weight ranging from 100,000 to 30,000,000 g/mol and in particular, from 1,000,000 to 30,000,000 g/mol.

The blend composition of a polycarbonate resin and a vinyl-based copolymer may further include (C) 1 to 20 parts by weight of a core-shell graft copolymer including an acryl-based shell based on 100 parts by weight of the mixed resin. The core-shell graft copolymer including an acryl-based shell (C) is prepared by grafting an unsaturated compound of an acryl-based monomer, a heterocyclic monomer, an aromatic vinyl monomer, an unsaturated nitrile monomer, or a combination thereof onto a rubber polymer polymerized from a monomer of a diene-based monomer, an acryl-based monomer, a silicon-based monomer, or a combination thereof. The unsaturated compound may include at least one acryl-based monomer.

The blend composition of a polycarbonate resin and a vinyl-based copolymer further includes an antibacterial agent, a heat stabilizer, an antioxidant, a release agent, a light stabilizer, a compatibilizer, an inorganic material additive, a surfactant, a coupling agent, a plasticizer, an admixture, a stabilizer, a lubricant, an antistatic agent, a flame proofing agent, a weather-resistance agent, a colorant, an ultraviolet (UV) blocking agent, a filler, a nucleating agent, an adhesion aid, an adhesive, or a combination thereof.

According to another aspect of this disclosure, provided is a molded product made from the blend composition of a polycarbonate resin and a vinyl-based copolymer.

Hereinafter, further aspects of this disclosure will be described in detail.
FIG. 1 is a transmission electron microscope (TEM) photograph of a blend composition of a polycarbonate resin and a vinyl-based copolymer according to Comparative Example 1.
FIG. 2 is a transmission electron microscope (TEM) photograph of a blend composition of a polycarbonate resin and a vinyl-based copolymer according to Example 1.
FIG. 3 is a transmission electron microscope (TEM) photograph of a blend composition of a polycarbonate resin and a vinyl-based copolymer according to Example 2.
FIG. 4 is a transmission electron microscope (TEM) photograph of a blend composition of a polycarbonate resin and a vinyl-based copolymer according to Example 3.
FIG. 5 is a graph showing viscosity measurements according to shear force about a blend composition of a polycarbonate resin and a vinyl-based copolymer of Examples 2 and 4 and Comparative Example 1.

Exemplary embodiments will hereinafter be described in detail. However, these embodiments are exemplary, and this disclosure is not limited thereto.

When specific definition is not otherwise provided, the term "substituted" refers to one substituted with a substituent of a halogen, a C1 to C30 alkyl, a C1 to C30 haloalkyl, a C6 to C30 aryl, a C2 to C30 heteroaryl, or a C1 to C20 alkoxy.

When specific definition is not otherwise provided, the term "heterocyclic monomer" refers to a cyclic compound monomer including at least one of heteroatoms selected from N, O, S, or P.

When specific definition is not otherwise provided, the term "different kinds" refers to monomers different from each other. For example, the term "different kinds of acryl-based monomer" refers to acryl-based monomers different from each other, the term "different kinds of aromatic vinyl monomer" refers to aromatic vinyl monomers different from each other, and the term "different kinds of heterocyclic monomer" refers to heterocyclic monomers different from each other.

The blend composition of a polycarbonate resin and a vinyl-based copolymer according to one embodiment includes (A) a mixed resin including (A-1) a polycarbonate resin and (A-2) a vinyl-based copolymer, and (B) an acryl-based copolymer including at least one of acryl-based monomers.

Exemplary components included in the blend composition of a polycarbonate resin and a vinyl-based copolymer according to embodiments will hereinafter be described in detail. However, these embodiments are exemplary, and this disclosure is not limited thereto.

### (A) Mixed resin

### (A-1) Polycarbonate resin

The polycarbonate resin may be prepared by reacting diphenols of the following Chemical Formula 1 with a compound of phosgene, halogen formate, carbonate ester, or a combination thereof.

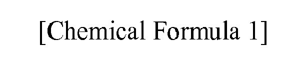

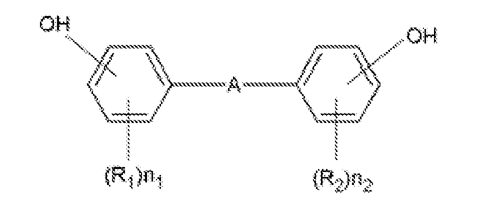

In the above Chemical Formula 1,
A is a linker selected from the group consisting of a single bond, a substituted or unsubstituted C1 to C30 linear or branched alkylene, a substituted or unsubstituted C2 to C5 alkenylene, a substituted or unsubstituted C2 to C5 alkylidene, a substituted or unsubstituted C1 to C30 linear or branched haloalkylene, a substituted or unsubstituted C5 to C6 cycloalkylene, a substituted or unsubstituted C5 to C6 cycloalkenylene, a substituted or unsubstituted C5 to C10 cycloalkylidene, a substituted or unsubstituted C6 to C30 arylene, a substituted or unsubstituted C1 to C20 linear or branched alkoxylene, a halogen acid ester, a carbonate ester, CO, S, and SO₂,
each of R₁ and R₂ is independently selected from the group consisting of a substituted or unsubstituted C1 to C30 alkyl, and a substituted or unsubstituted C6 to C30 aryl, and
n₁ and n₂ are independently integers ranging from 0 to 4.

The diphenols represented by the above Chemical Formula 1 may be used in a combination to constitute repeating units of the polycarbonate resin. The diphenols include hydroquinone, resorcinol, 4,4'-dihydroxydiphenyl, 2,2-bis(4-hydroxyphenyl)propane (referred to as "bisphenol-A"), 2,4-bis(4-hydroxyphenyl)-2-methylbutane, bis ( 4-hydroxyphenyl)methane, 1,1-bis(4-hydroxyphenyl)cyclohexane, 2,2-bis(3-chloro-4-hydroxyphenyl)propane, 2,2-bis(3,5-dimethyl-4-hydroxyphenyl)propane, 2 , 2-bis(3,5-dichloro-4-hydroxyphenyl)propane, 2,2-bis(3,5-dibromo-4-hydroxyphenyl)propane, bis(4-hydroxyphenyl)sulfoxide, bis(4-hydroxyphenyl)ketone, bis(4-hydroxyphenyl)ether, and the like. In one embodiment, 2,2-bis(4-hydroxyphenyl)-propane, 2,2-bis(3,5-dichloro-4-hydroxyphenyl)-propane, or 1,1-bis(4-hydroxyphenyl)-cyclohexane of the diphenols may be preferable. In another embodiment, 2,2-bis(4-hydroxyphenyl)-propane may be more preferable.

In one embodiment, the polycarbonate resin has a weight average molecular weight ranging from 10,000 to 200,000 g/mol, and in another embodiment, from 15,000 to 80,000 g/mol.

The polycarbonate resin may be a mixture of copolymers obtained using two or more diphenols that are different from each other. The polycarbonate resin may be a linear polycarbonate resin, a branched polycarbonate resin, a polyester carbonate copolymer, and the like.

The linear polycarbonate resin may include a bisphenol-A-based polycarbonate resin. The branched polycarbonate resin may be produced by reacting a multi-functional aromatic compound such as trimellitic anhydride, trimellitic acid, and so on with diphenols and a carbonate. The multi-functional aromatic compound may be included in an amount of 0.05 to 2 mol% based on the total weight of the branched polycarbonate resin. The polyester carbonate copolymer resin may include one produced by reacting a difunctional carboxylic acid with diphenols and a carbonate. The carbonate may include a diaryl carbonate such as diphenyl carbonate, and ethylene carbonate.

The polycarbonate resin may be included in an amount of 10 to 90 wt%, and in one embodiment, 20 to 60 wt% based on the total weight of the mixed resin including the polycarbonate resin and the vinyl-based copolymer. When the polycarbonate resin is included within the range, the blend composition may have an excellent property balance between Impact strength, heat resistance and workability.

### (A-2) Vinyl-based copolymer

The vinyl-based copolymer includes a rubber-modified vinyl-based graft copolymer, a linear vinyl-based copolymer, or a combination thereof.

The rubber modified vinyl-based graft copolymer may be prepared by grafting 5 to 95 wt% of a vinyl-based polymer onto 5 to 95 wt% of a rubber polymer.

The vinyl-based polymer may include 50 to 95 wt% of a first vinyl-based monomer selected from an aromatic vinyl monomer, an acryl-based monomer, a heterocyclic monomer, or a combination thereof; and 5 to 50 wt% of a second vinyl-based monomer selected from an unsaturated nitrile monomer, an acryl-based monomer, a heterocyclic monomer, or a combination thereof.

The aromatic vinyl monomer may include styrene, C1 to C10 alkyl substituted styrene, halogen substituted styrene, or a combination thereof. Examples of the alkyl substituted styrene may include o-ethyl styrene, m-ethyl styrene, p-ethyl styrene, α-methyl styrene, and the like.

The acryl-based monomer may include (meth)acrylic acid alkyl ester, (meth)acrylic acid ester, or a combination thereof. Herein, the alkyl may be a C1 to C10 alkyl. Examples of the (meth)acrylic acid alkyl ester may include methyl(meth)acrylate, ethyl(meth)acrylate, propyl(meth)acrylate, butyl(meth)acrylate, and the like and in particular, methyl(meth)acrylate, and the like. Examples of the (meth)acrylic acid ester may include (meth)acrylate, and the like.

The heterocyclic monomer may be substituted or non-substituted C2 to C20 cycloalkyl compound, substituted or non-substituted C2 to C20 cycloalkenyl compound, or substituted or non-substituted C2 to C20 cycloalkynyl compound. The heterocyclic monomer may include maleic anhydride, alkyl or phenyl N-substituted maleimide, or a combination thereof.

The unsaturated nitrile monomer may include acrylonitrile, methacrylonitrile, ethacrylonitrile, or a combination thereof.

The rubber polymer may be selected from the group consisting of a butadiene rubber, an acryl rubber, an ethylene/propylene rubber, a styrene/butadiene rubber, an acrylonitrile/butadiene rubber, an isoprene rubber, an ethylene-propylene-diene terpolymer (EPDM) rubber, a polyorganosiloxane/polyalkyl(meth)acrylate rubber composite, or a combination thereof.

The rubber modified vinyl-based graft copolymer may be prepared by using a rubber a particle diameter ranging from 0.05 to 4 µm to improve impact resistance and surface characteristic of a molded product. When the rubber has a particle diameter ranging from 0.05 to 4 µm, it can secure excellent impact strength.

The rubber modified vinyl-based graft copolymer may be used in a single or a mixture of more than two.

Examples of the rubber modified vinyl-based graft copolymer may be prepared by graft-copolymerizing styrene, acrylonitrile and selectively methyl(meth)acrylate into a butadiene rubber, an acryl rubber, or a styrene/butadiene rubber as a mixture.

Another example of the rubber modified vinyl-based graft copolymer may be prepared by graft-copolymerizing methyl(meth)acrylate onto a butadiene rubber, an acryl rubber, or a styrene/butadiene rubber.

The particular examples of a rubber modified graft copolymer may include an acrylonitrile-butadiene-styrene (ABS) copolymer.

A method of preparing the rubber modified vinyl-based graft copolymer may be well-known to those who have common knowledge in this field and be selected from emulsion polymerization, suspension polymerization, solution polymerization, or massivepolymerization. In particular, it may include emulsion polymerization or massive polymerization using a polymerization initiator by injecting the aforementioned aromatic vinyl monomer in a rubber polymer.

The linear vinyl-based copolymer may include the first vinyl-based monomer of an aromatic vinyl monomer, an acryl-based monomer, a heterocyclic monomer, or a combination thereof; and the second vinyl-based monomer of an unsaturated nitrile monomer, an acryl-based monomer, a heterocyclic monomer, or a combination thereof.

The aromatic vinyl monomer may include styrene, C1 to C10 alkyl substituted styrene, halogen substituted styrene, or a combination thereof. Examples of the alkyl substituted styrene may include o-ethyl styrene, m-ethyl styrene, p-ethyl styrene, α-methyl styrene, and the like.

The acryl-based monomer may include (meth)acrylic acid alkyl ester, (meth)acrylic acid ester, or a combination thereof. Herein, the alkyl may be a C1 to C10 alkyl. Examples of the (meth)acrylic acid alkyl ester may include methyl(meth)acrylate, ethyl(meth)acrylate, propyl(meth)acrylate, butyl(meth)acrylate, and the like. In particular, it may include methyl(meth)acrylate. Examples of the (meth)acrylic acid ester may include (meth)acrylate, and the like.

The heterocyclic monomer may be substituted or non-substituted C2 to C20 cycloalkyl compound, substituted or non-substituted C2 to C20 cycloalkenyl compound, or substituted or non-substituted C2 to C20 cycloalkynyl compound. The heterocyclic monomer may include maleic anhydride, alkyl or phenyl N-substituted maleimide, or a combination thereof.

The unsaturated nitrile monomer includes acrylonitrile, methacrylonitrile, ethacrylonitrile, or a combination thereof.

The linear vinyl-based copolymer may include 50 to 95 wt% of the first vinyl-based monomer and 5 to 50 wt% of the second vinyl-based monomer. When they are mixed within the ratio, the linear vinyl-based copolymer may improve thermal coloring and chemical resistance.

The linear vinyl-based copolymer may be produced as a byproduct when the rubber modified vinyl-based graft copolymer is prepared. In particular, it may be more produced when a vinyl-based monomer mixture is excessively grafted onto a small amount of a rubber polymer or when used is excessively a chain-transfer agent for controlling a molecular weight.

Examples of the linear vinyl-based copolymer may include a monomer mixture of styrene, acrylonitrile, and selectively methylmethacrylate; a monomer mixture of α-methylstyrene, acrylonitrile, and selectively methylmethacrylate; or a monomer mixture of styrene, α-methylstyrene, acrylonitrile, and selectively methylmethacrylate.

The linear vinyl-based copolymer may be prepared in a method of emulsion polymerization, suspension polymerization, solution polymerization, or massive polymerization. It may have a weight average molecular weight ranging from 15,000 to 300,000 g/mol.

Another example of the linear vinyl-based copolymer may include a mixture of methylmethacrylate and selectively methylacrylate. This linear vinyl-based copolymer may be prepared in a methof of emulsion polymerization, suspension polymerization, solution polymerization or massive polymerization and have a weight average molecular weight ranging from 20,000 to 250,000 g/mol.

Still another example of the linear vinyl-based copolymer may include a copolymer of styrene and maleic anhydride and be prepared in a method of consecutive massive polymerization and solution polymerization. The styrene and the maleic anhydride may be mixed in a wide ratio range. In particular, the maleic anhydride may be included in an amount of 5 to 50 wt% based on the vinyl-based copolymer. The styrene and the maleic anhydride copolymer may have a weight average molecular weight in a wide range. In particular, it may have a weight average molecular weight ranging from 20,000 to 200,000 g/mol and an intrinsic viscosity ranging from 0.3 to 0.9 dl/g.

The vinyl-based copolymer may be prepared by mixing the rubber modified vinyl-based graft copolymer and the linear vinyl-based copolymer.

The vinyl-based copolymer may be included in an amount of 10 to 80 wt% based on the total weight of the mixed resin including the polycarbonate resin and the vinyl-based copolymer. In particular, it may be included in an amount of 20 to 70 wt%. When the vinyl-based copolymer is included within the range, it may improve impact resistance, flame retardant, and heat resistance.

### (B) Acryl-based copolymer

The acryl-based copolymer may activate inter molecular diffusion and improve miscibility between a polycarbonate resin and a vinyl-based copolymer when they mixed. In this way, it may effectively decrease the phase separation between the polycarbonate resin and the vinyl-based copolymer and thereby, improve weld strength.

The acryl-based copolymer includes more than one acryl-based monomer and may be prepared by copolymerizing a first monomer of an aromatic vinyl monomer, an acryl-based monomer, a heterocyclic monomer, or a combination thereof; and a second monomer of another aromatic vinyl monomer differing from the aromatic vinyl monomer, another acryl-based monomer differing from the acryl-based monomer, another heterocyclic monomer differing from the heterocyclic monomer, or a combination thereof. At least either of the first and second monomer may include an acryl-based monomer. In particular, the acryl-based copolymer may be a copolymer of an acryl-based monomer and another acryl-based monomer differing from the acryl-based monomer. In particular, it may be a copolymer of methylmethacrylate and ethylacrylate.

The acryl-based copolymer may be copolymerized by grafting the first monomer onto the second monomer. The grafted copolymer may have better impact strength.

The aromatic vinyl monomer may include styrene, C1 to C10 alkyl substituted styrene, halogen substituted styrene, or a combination thereof. Examples of the alkyl substituted styrene may include o-ethyl styrene, m-ethyl styrene, p-ethyl styrene, α-methyl styrene, and the like.

The acryl-based monomer may include (meth)acrylic acid alkyl ester, (meth)acrylic acid ester, or a combination thereof. Herein, the alkyl may be a C1 to C10 alkyl. Examples of the (meth)acrylic acid alkyl ester may include methyl(meth)acrylate, ethyl(meth)acrylate, propyl(meth)acrylate, butyl(meth)acrylate, and the like. In particular, it may include methyl(meth)acrylate. Examples of the (meth)acrylic acid ester may include (meth)acrylate, and the like.

The heterocyclic monomer may be substituted or non-substituted C2 to C20 cycloalkyl compound, substituted or non-substituted C2 to C20 cycloalkenyl compound, or substituted or non-substituted C2 to C20 cycloalkynyl compound. The heterocyclic monomer may include maleic anhydride, alkyl or phenyl N-substituted maleimide, or a combination thereof.

The acryl-based copolymer may include 30 to 90 wt% of the first monomer and 10 to 70 wt% of the second monomer. When it includes them within the ratio, it may improve miscibility between polycarbonate resin and vinyl-based copolymer.

The acryl-based copolymer may be prepared in a method of emulsion polymerization, suspension polymerization, solution polymerization, or massive polymerization and have a weight average molecular weight ranging from 100,000 to 30,000,000 g/mol, in particular, from 1,000,000 to 30,000,000 g/mol, in more particular, from 1,000,000 to 10,000,000 g/mol, and in most particular, from 1,000,000 to 7,000,000 g/mol. When it has a weight average molecular weight within the range, it may not damage on fluidity at a shear speed region during the injection and secure stable morphology among the composition components.

The acryl-based copolymer may be used in a single or a mixture of more than two.

It may be included in an amount of 0.1 to 20 parts by weight based on 100 parts by weight of a mixed resin including the polycarbonate resin and the vinyl-based copolymer, in particular, in an amount of 0.5 to 18 parts by weight, and in more particular, in an amount of 1 to 15 parts by weight. When it is included within the range, it may accomplish excellent impact resistance and heat resistance.

### (C) Core-shell graft copolymer including an acryl-based shell

According to one exemplary embodiment, a blend composition of a polycarbonate resin and a vinyl-based copolymer may further include a core-shell graft copolymer.

The core-shell graft copolymer works as an impact-reinforcing agent in a polycarbonate-based thermoplastic resin composition.

The core-shell graft copolymer has a core-shell structure including a hard shell formed by grafting an unsaturated monomer onto a rubber core and may be a copolymer prepared by grafting an unsaturated compound of an acryl-based monomer, a heterocyclic monomer, an aromatic vinyl monomer, an unsaturated nitrile monomer, or a combination thereof onto a rubber polymer polymerized from a monomer of a diene-based monomer, an acryl-based monomer, a silicon-based monomer, or a combination thereof. The unsaturated compound includes at least one acryl-based monomer.

The diene-based monomer may include C4 to C6 butadiene, isoprene, and the like and in particular, butadiene. The rubber polymer polymerized from the diene-based monomer may include a butadiene rubber, an acryl rubber, a styrene/butadiene rubber, an acrylonitrile/butadiene rubber, an isoprene rubber, an ethylene-propylene-diene terpolymer (EPDM), and the like.

The acryl-based monomer may include methyl(meth)acrylate, ethyl(meth)acrylate, n-propyl(meth)acrylate, n-butyl(meth)acrylate, hexyl(meth)acrylate, 2-ethylhexyl(meth)acrylate, and the like. Herein, it may further include a hardener of ethyleneglycoldi(meth)acrylate, propyleneglycoldi(meth)acrylate, 1,3-butyleneglycoldi(meth)acrylate, 1,4-butyleneglycoldi(meth)acrylate, allyl(meth)acrylate, triallylcyanurate, and the like.

The silicon-based monomer may include hexamethylcyclotrisiloxane, octamethylcyclotetrasiloxane, decamethylcyclopentasiloxane, dodecamethylcyclohexasiloxane, trimethyltriphenylcyclotrisiloxane, tetramethyltetraphenylcyclotetrasiloxane, octaphenylcyclotetrasiloxane, orcombinations thereof. Herein, it may further include a hardener of trimethoxymethylsilane, triethoxyphenylsilane, tetramethoxysilane, tetraethoxysilane, and the like.

The rubber polymer may have a rubber average particle diameter ranging from 0.4 to 1 µm and maintain impact resistance and coloring balance.

Among the unsaturated compounds, an acryl-based monomer may include (meth)acrylic acid alkyl ester, (meth)acrylic acid ester, or a combination thereof. Herein, the alkyl may be a C1 to C10alkyl Examples of the (meth)acrylic acid alkyl ester may include methyl(meth)acrylate, ethyl(meth)acrylate, propyl(meth)acrylate, butyl(meth)acrylate, and the like and in particular, methyl(meth)acrylate. Examples of the (meth)acrylic acid ester may include (meth)acrylate, and the like.

The heterocyclic monomer may be substituted or non-substituted C2 to C20 cycloalkyl compound, substituted or non-substituted C2 to C20 cycloalkenyl compound, or substituted or non-substituted C2 to C20 cycloalkynyl compound. The heterocyclic monomer may include maleic anhydride, alkyl or phenyl N-substituted maleimide, and the like.

The aromatic vinyl monomer may include styrene, C1 to C10 alkyl substituted styrene, halogen substituted styrene, or a combination thereof. Examples of the alkyl substituted styrene may include o-ethyl styrene, m-ethyl styrene, p-ethyl styrene, α-methyl styrene, and the like.

The unsaturated nitrile monomer may include acrylonitrile, methacrylonitrile, ethacrylonitrile, or a combination thereof.

Among the unsaturated compounds, a polymer prepared from more than one monomer may include polymethylmethacrylate and the like.

The core-shell copolymer may have an average particle size ranging from 0.1 to 0.5 µm. When it has an average particle size within the range, it may be well-dispersed into a blend composition of a polycarbonate resin and a vinyl-based copoymer. When it has an impact from outside, it may easily absorb the impact, increasing impact reinforcing effects.

The core-shell copolymer may include 30 to 70 wt% of the rubber polymer and 30 to 70 wt% of an unsaturated compound grafted thereonto. When it has them within the ratio, it may have good compatibility with a polycarbonate resin, maximizing impact reinforcing effects.

The core-shell graft copolymer may be included in an amount of 1 to 20 parts by weight based on 100 parts by weight of a mixed resin including the polycarbonate resin and the vinyl-based copolymer and in particular, in an amount of 5 to 15 parts by weight. When it is included within the range, it may bring about excellent impact reinforcing effects and improve mechanical strength of a blend composition of a polycarbonate resin and a vinyl-based copolymer such as tensile strength, flexural strength, and flexural modulus.

### (D) Other additive

Accordingly to one present exemplary embodiment, a blend composition of a polycarbonate resin and a vinyl-based copolymer may further include an additive.

The additive may include an antibacterial agent, a heat stabilizer, an antioxidant, a release agent, a light stabilizer, a compatibilizer, an inorganic material additive, a surfactant, a coupling agent, a plasticizer, an admixture, a stabilizer, a lubricant, an antistatic agent, a flame-proofing agent, a weather-resistance agent, a colorant, an ultraviolet (UV) blocking agent, a filler, a nucleating agent, an adhesion aid, an adhesive, or a combination thereof.

The antioxidant may include phenol-type, phosphite-type, thioether-type, or amine-type antioxidants. The release agent may include a fluorine-containing polymer, silicone oil, metal salt of stearic acid, metal salt of montanic acid, montanic acid ester wax, or polyethylene wax. In addition, the weather-resistance agent may include benzophenone-type or amine-type weather-resistance agent. The colorant may include dye or pigment. The ultraviolet (UV) blocking agent may include titaium oxide (TiO₂), or carbonblack. The filler may include glass fiber, carbon fiber, silica, mica, alumina, clay, calcium carbonate, and calcium sulfate or glass bead. When the filler is included, it may improve properties such as mechanical strength, heat resistance, and the like. In addition, the nucleating agent may include talc or clay.

The additive may be included in an amount of 40 parts by weight or less based on 100 parts by weight of a mixed resin including the polycarbonate resin and the vinyl-based copolymer and in particular, in an amount of 0.1 to 20 parts by weight. When it is included within the range, it may bring about respective effect depending on each usage and improve mechanical properties and surface appearance.

According to one present exemplary embodiment, a blend composition of a polycarbonate resin and a vinyl-based copolymer may be prepared in a well-known method of preparing a resin composition. For example, the components and other additives are simultaneously mixed together and then, melt-extruded in an extruder, preparing into a pellet.

According to another embodiment, a blend composition of a polycarbonate resin and a vinyl-based copolymer may be molded to produce a product. The blend composition of a polycarbonate resin and a vinyl-based copolymer may be used for a molded product requiring weld strength, durability, and heat resistance, for example, an auto, machine parts, electric/electronic parts, office machines such as a computer and the like, miscellaneous, and the like. In particular, it may be usefully applied to a housing for electric/electronic goods such as television, a computer, a printer, a washing machine, a cassette player, an audio equipment, a mobile phone, and the like. It may also be widely used for an electric/electronic housing requiring complex molding of a thin film, a computer housing, other office machines, or the like.

Hereinafter, exemplary embodiments are illustrated. However, the following exemplary embodiments are provided for illustration or explanation in detail but do not limit this disclosure.

### Example

According to the present exemplary embodiment, the blend composition of a polycarbonate resin and a vinyl-based copolymer may include each component as follows.

### (A) Mixed resin

### (A-1) Polycarbonate resin

Used was a bisphenol-A type polycarbonate (Cheil Industries Inc., SC-1080) with a weight average molecular weight (Mw) of 25,000 g/mol.

### (A-2) Vinyl-based copolymer

(A-2-1) A copolymer was prepared by copolymerizing 31.5 wt% of styrene, 10.5 wt% of acrylonitrile, and 58 wt% of butadiene. The copolymer was washed, dehydrated, and dried, preparing a powder-typed ABS (acrylonitrilebutadiene-styrene) copolymer
(A-2-2) A SAN copolymer was prepared by mixing 71 parts by weight of styrene, 29 parts by weight of acrylonitrile, and 120 parts by weight of deionized water, 0.17 parts by weight of azobisisobutyronitrile, 0.4 parts by weight of t-dodecyl mercaptan, and 0.5 parts by weight of tricalciumphosphate to the mixture, and suspension-polymerizing the resulting mixture at 75°C for 5 hours. This copolymer was washed, dehydrated, and dried, preparing a powder-typed SAN copolymer.

### (B) Acryl-based copolymer

Used was a graft copolymer of poly(methylmethacrylate-ethylacrylate) with a weight average molecular weight of 3,000,000g/mol (Rohm and Haas Co., K125P).

### (B') Polymethylmethacrylate (PMMA) polymer

A polymethylmethacrylate (PMMA) polymer with a weight average molecular weight of 80,000 g/mol was used as for Comparative Example.

### (C) Core-shell graft copolymer including an acryl-based shell

A methacrylate-butadiene-styrene (MBS Co.) impact-reinforcing agent (MRC Co., C223A) including 70 wt% of butadiene was used as a copolymer including a butadiene core and a methacrylate-styrene shell grafted thereinto.

### Examples 1 to 8 and Comparative Examples 1 to 3

Each aforementioned component was put in a mixer as shown in the following Table 1, mixed together, and extruded using a twin-screw extruder set to be L/D=35 and Φ=45mm at 260°C of a nozzle temperature, preparing a pellet. The pellet was dried at 80 °C for 5 hours before injection molding.

A specimen for evaluating properties was prepared using a 10 oz injector at a temperature of 250 °C. Another specimen for measuring weld strength was prepared using a 10 oz injector at a temperature of 250 °C.

### Experimental Example

The specimens according to Examples 1 to 8 and Comparative Examples 1 to 3 were allowed to stand at 23 °C and a relative humidity degree (RHD) of 50 % for 48 hours and evaluated regarding properties in the following method. The results are shown in the following Table 1.
(1) Izod impact strength: their Izod impact strength (1/4", 1/8" notch) was measured according to ASTM D256.
(2) Weld impact strength: their Izod impact strength (1/8") was measured according to ASTM D256, after a weld was formed in the middle of the specimens through both side gates.
(3) Flow index: it was measured at 250°C under a condition of 10kg according to ASTM D1238.
(4) Spiral 1t (270°C): it was measured at a barrel temperature of 270 °C and a molding temperature of 70 °C.

**[Table 1]**

| | | | Example | | | | | | | | Comparative Example | | |
|---|---|---|---|---|---|---|---|---|---|---|---|---|---|
| | | | 1 | 2 | 3 | 4 | 5 | 6 | 7 | 8 | 1 | 2 | 3 |
| (A) mixed resin | A-1 polycarbonate resin (wt%) | | 65 | 65 | 65 | 65 | 65 | 55 | 60 | 65 | 65 | 65 | 47 |
| | A-2 vinyl-based copolymer (wt%) | A-2-1 | 35 | 35 | 35 | 35 | 35 | 20 | 20 | 15 | 35 | 35 | 11 |
| | | A-2-2 | - | - | - | - | - | 25 | 20 | 20 | - | - | 13 |
| (B) acryl-based copolymer (parts by weight*) | | | 1 | 3 | 5 | 8 | 15 | 5 | 3 | 8 | - | - | 25 |
| (B') PMMA polymer (parts by weight*) | | | - | - | - | - | - | - | - | - | - | 8 | - |
| (C) core-shell graft copolymer (parts by weight*) | | | - | - | - | - | - | 8 | 5 | 3 | - | - | 4 |
| Izod impact strength (kgf·cm/cm) | | 1/4" | 45 | 45 | 46 | 45 | 42 | 48 | 46 | 45 | 38 | 38 | 28 |
| | | 1/8" | 65 | 64 | 64 | 62 | 59 | 58 | 60 | 57 | 54 | 54 | 47 |
| Weld impact strength (1/8", kgf·cm/cm) | | | 18 | 16 | 20 | 27 | 18 | 21 | 24 | 26 | 11 | 10 | 33 |
| Flow index (g/10min) | | | 35 | 30 | 26 | 20 | 15 | 18 | 32 | 17 | 35 | 40 | 2 |
| Spiral 1t (270°C) | | | 170 | 169 | 169 | 169 | 168 | 152 | 173 | 155 | 171 | 174 | 160 |

| | | | | | | | | | | | | | |
|---|---|---|---|---|---|---|---|---|---|---|---|---|---|
| * parts by weight: based on 100 parts of weight of a mixed resin (A). | | | | | | | | | | | | | |

Referring to Table 1, Examples 1 to 8 including a polycarbonate resin, a vinyl-based copolymer, and an acryl-based copolymer including at least one of acryl-based monomers had excellent weld strength and impact resistance compared with Comparative Example 1 including no acryl-based copolymer and

Comparative Examples 2 and 3 including a PMMA copolymer instead of the acryl-based copolymer. The reason is that an acryl-based copolymer is added to the blend composition of a polycarbonate resin and a vinyl-based copolymer and thereby, decreases phase separation of the polycarbonate resin and the vinyl-based copolymer.

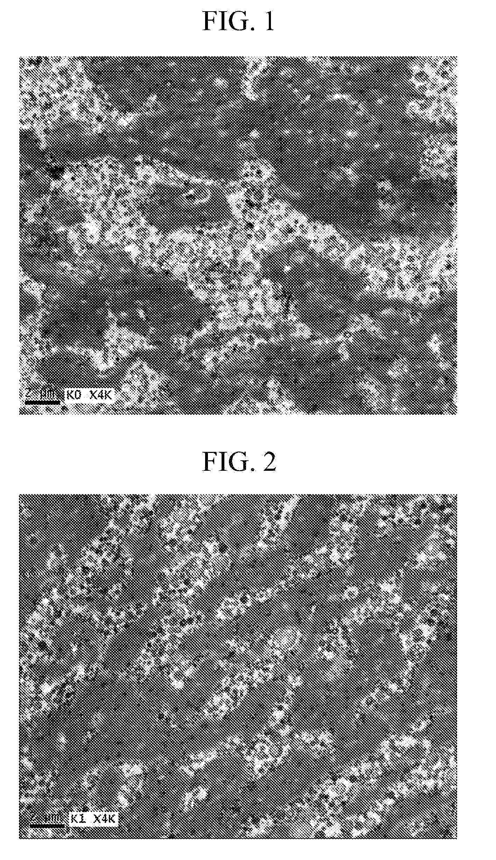

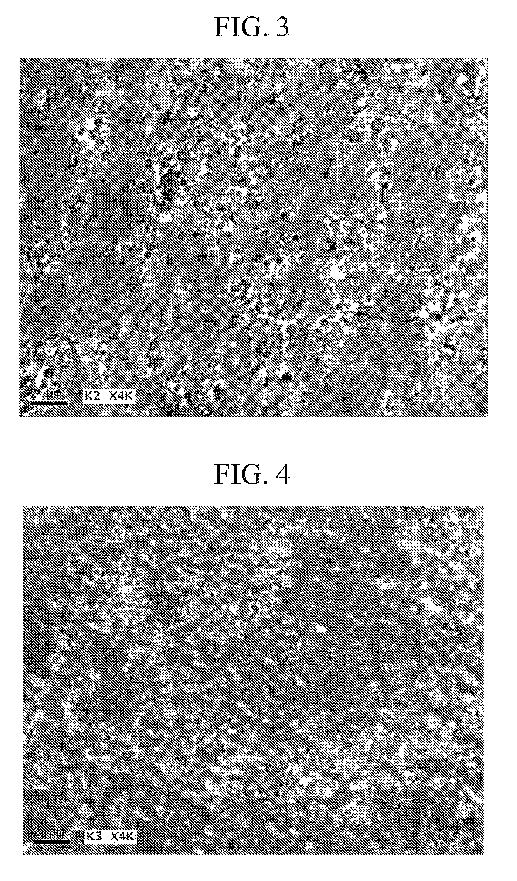

This result is also identified in FIGS. 1 to 4. FIG. 1 provides the transmission electron microscope (TEM) photograph of the blend composition of a polycarbonate resin and a vinyl-based copolymer according to Comparative Example 1. FIGS. 2 to 4 respectively provide the transmission electron microscope (TEM) photograph of the blend composition of a polycarbonate resin and a vinyl-based copolymer according to Examples 1 to 3. Referring to FIGS. 1 to 4, while Comparative Example 1 including no acryl-based copolymer had a severe phase separation, Examples 1 to 3 had a decreased phase separation according to addition and increase of an acryl-based copolymer. In this way, the phase separation at a weld region where two kinds of resins turned out to increases impact strength there.

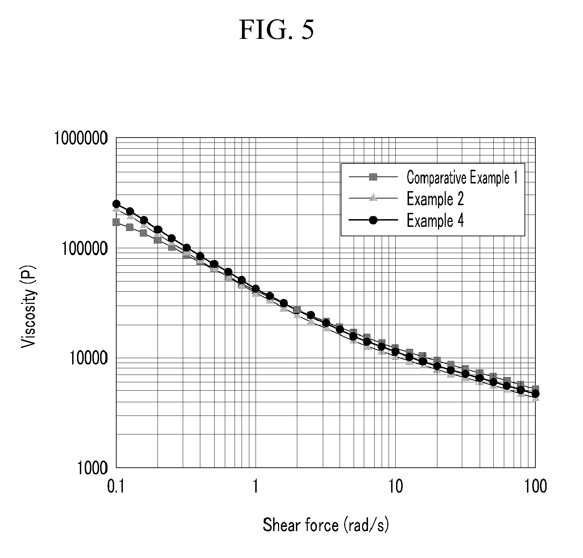

On the other hand, FIG. 5 is a graph showing viscosity measurements of the blend composition of a polycarbonate resin and a vinyl-based copolymer of Examples 2 and 4 and Comparative Example 1 according to shear force. The viscosity was measured at a temperature of 270°C and strain of 5% with a dynamic frequency sweep.

Referring to FIG. 5, the blend compositions of a polycarbonate resin and a vinyl-based copolymer according to Examples 2 and 4 had high viscosity at a region with low shear force. Accordingly, it can prevent coalescence of dispersive phases. In addition, the blend compositions of a polycarbonate resin and a vinyl-based copolymer of Examples 2 and 4 had almost the same viscosity at the region with high shear force. Accordingly, when these two resins are applied for the weld, they can maintain high impact strength with no phase separation. On the other hand, Comparative Example 1 including no acryl-based copolymer or including a PMMA polymer instead of the acryl-based copolymer had low viscosity at a region with low shear force, hardly preventing coalescence effects.

While this disclosure has been described in connection with what is presently considered to be practical exemplary embodiments, it is to be understood that this disclosure is not limited to the disclosed embodiments, but, on the contrary, is intended to cover various modifications and equivalent arrangements included within the spirit and scope of the appended claims. Therefore, the aforementioned embodiments are understood to be exemplary but not limiting this disclosure in any way.

This application claims priority to and the benefit of Korean Patent Application Nos. 10-2008-0131319, 10-2008-0133685, 10-2009-0127311, and 10-2009-0127312 filed on December 22, 2008, December 24, 2008, December 18, 2009, and December 18, 2009 the entire contents of which are incorporated herein by reference.

## Claims

1. A blend composition of a polycarbonate resin and a vinyl-based copolymer comprising
(A) a mixed resin including (A-1) 20 to 90 wt% of a polycarbonate resin; and (A-2) 10 to 80 wt% of a vinyl-based copolymer;
(B) 0.1 to 20 parts by weight of an acryl-based copolymer including at least one of an acryl-based monomer based on 100 parts by weight of the mixed resin.

2. The blend composition of claim 1, wherein the polycarbonate resin is prepared by reacting diphenols with a compound of phosgene, halogen formate, carbonate ester, or a combination thereof.

3. The blend composition of claim 1 or 2, wherein the vinyl-based copolymer (A-2) comprises a rubber modified vinyl-based graft copolymer, a linear vinyl-based copolymer, or a combination thereof.

4. The blend composition of claim 3, wherein the rubber modified vinyl-based graft copolymer comprises
5 to 95 wt% of a vinyl-based polymer including 50 to 95 wt% of a first vinyl-based monomer selected from an aromatic vinyl monomer, an acryl-based monomer, a heterocyclic monomer, or a combination thereof; and 5 to 50 wt% of second vinyl-based monomer selected from a unsaturated nitrile monomer, an acryl-based monomer, a heterocyclic monomer, or a combination thereof, which is grafted onto 5 to 95 wt% of a rubber polymer selected from a butadiene rubber, an acryl rubber, an ethylene/propylene rubber, a styrene/butadiene rubber, an acrylonitrile/butadiene rubber, an isoprene rubber, an ethylene-propylene-diene (EPDM) terpolymer, a polyorganosiloxane/polyalkyl(meth)acrylate rubber composite, or a combination thereof.

5. The blend composition of any of claim 3, wherein the linear vinyl-based copolymer comprises a copolymer of 50 to 95 wt% of a first vinyl-based monomer selected from an aromatic vinyl monomer, an acryl-based monomer, a heterocyclic monomer, or a combination thereof; and 5 to 50 wt% of a second vinyl-based monomer selected from an unsaturated nitrile monomer, an acryl-based monomer, a heterocyclic monomer, or a combination thereof.

6. The blend composition of any of claims 1 to 5, wherein the acryl-based copolymer (B) comprises
a copolymer of 30 to 90 wt% of a first monomer selected an aromatic vinyl monomer, an acryl-based monomer, a heterocyclic monomer, or a combination thereof; and 10 to 70 wt% of a second monomer selected from an aromatic vinyl monomer being different kinds from the aromatic vinyl monomer, an acryl-based monomer being different kinds from the acryl-based monomer, a heterocyclic monomer being different kinds from the heterocyclic monomer, or a combination thereof,
wherein at least one of the first monomer and the second monomer is an acryl-based monomer.

7. The blend composition of claim 6, wherein the acryl-based copolymer (B) includes the first monomer grafted and copolymerized with the second monomer.

8. The blend composition of any of claims 1 to 7, wherein the acryl-based copolymer (B) is a copolymer of an acryl-based monomer and another acryl-based monomer differing from the acryl-based monomer.

9. The blend composition of any of claims 1 to 8, wherein the acryl-based copolymer (B) is a copolymer of methylmethacrylate and ethylacrylate.

10. The blend composition of any of claims 1 to 9, wherein the acryl-based copolymer (B) has a weight average molecular weight ranging from 100,000 to 30,000,000 g/mol.

11. The blend composition of any of claims 1 to 10, wherein the acryl-based copolymer (B) has a weight average molecular weight ranging from 1,000,000 to 30,000,000 g/mol.

12. The blend composition of any of claims 1 to 11, which further comprises (C) 1 to 20 parts by weight of a core-shell graft copolymer comprising an acryl-based shell based on 100 parts by weight of the mixed resin.

13. The blend composition of claim 12, wherein the core-shell graft copolymer comprising an acryl-based shell (C) is a copolymer prepared by grafting an unsaturated compound of an acryl-based monomer, a heterocyclic monomer, an aromatic vinyl monomer, an unsaturated nitrile monomer, or a combination thereof into a rubber polymer polymerized from a monomer of a diene-based monomer, an acryl-based monomer, a silicon-based monomer, or a combination thereof, and wherein the unsaturated compound comprises at least one acryl-based monomer.

14. The blend composition of any of claims 1 to 13, which further comprises an antibacterial agent, a heat stabilizer, an antioxidant, a release agent, a light stabilizer, a compatibilizer, an inorganic material additive, a surfactant, a coupling agent, a plasticizer, an admixture, a stabilizer, a lubricant, an antistatic agent, a flame proofing agent, a weather-resistance agent, a colorant, an ultraviolet (UV) blocking agent, a filler, a nucleating agent, an adhesion aid, an adhesive, or a combination thereof.

15. A molded product obtainable from the blend composition of a polycarbonate resin and a vinyl-based copolymer according to any one of claims 1 to 14.
